**Europäisches Patentamt**

**European Patent Office**

**Office européen des brevets**

(11) Veröffentlichungsnummer: **0 337 933 B1**

(12) **EUROPÄISCHE PATENTSCHRIFT**

(45) Veröffentlichungstag der Patentschrift: **12.01.94**

(51) Int. Cl.5: **G01N 21/69**

(21) Anmeldenummer: **89810145.6**

(22) Anmeldetag: **23.02.89**

(54) **Vorrichtung zum Bestimmen von Verunreinigungen in Gasen und Verwendung der Vorrichtung.**

(30) Priorität: **31.03.88 CH 1234/88**

(43) Veröffentlichungstag der Anmeldung:
**18.10.89 Patentblatt 89/42**

(45) Bekanntmachung des Hinweises auf die
Patenterteilung:
**12.01.94 Patentblatt 94/02**

(84) Benannte Vertragsstaaten:
**AT CH DE FR GB IT LI NL**

(56) Entgegenhaltungen:
**EP-A- 0 192 919     EP-A- 0 292 143
DE-B- 1 087 832      SU-A- 188 591
US-A- 2 855 820      US-A- 3 951 607**

**R. IKAN et al.: "Organic chemistry: Compound detection", in Encyclopedia of Physical Science and Technology, Band 10, 1987, Seiten 54-56, Academic Press, Inc, London, GB**

**CRYOGENICS, Band 26, Nr. 5, Mai 1986, Seiten 297-299, Butterworth & CO. (Publishers) Ltd; R.J. WALKER: "Detectorfor trace amounts of nitrogen in helium"**

**McGraw-Hill Enc. of Science and Techn., Vol. 6, p. 240, 241**

**R.G. Michel: "Atomic Spectrometry" in Enc. of Phys. Science and Techn., Vol. 2, p. 270-293, 1987 Academic Press**

(73) Patentinhaber: **Linde Aktiengesellschaft
Abraham-Lincoln-Strasse 21
D-65189 Wiesbaden(DE)**

(72) Erfinder: **Purtschert, Werner
Buchackerstrasse 115
CH-8400 Winterthur(CH)**
Erfinder: **Broder, Joerg
Buchackerstrasse 30
CH-8400 Winterthur(CH)**

EP 0 337 933 B1

**Beschreibung**

Die Erfindung bezieht sich auf eine Vorrichtung zum Bestimmen von kleinen Mengen von Verunreinigungen in Gasen, insbesondere in Edelgasen, aufgrund des Emissionsspektrums des verunreinigten Gases. Weiter bezieht sich die Erfindung auf eine Verwendung der Vorrichtung.

Die US-A-2.855.820 beschreibt eine Vorrichtung zum Analysieren von kleinsten Mengen von He. An die Platten-Elektroden ist eine pulsierende Gleichspannung so angelegt dass die Entladung, d.h. der lichtemittierende Vorgang, nicht unterbrochen wird. In DE-A-1.087.832 ist ein Analysator beschrieben, bei dem die zu analysierende Gasprobe mit einem elektrischen Wechselfeld hohen Potentials zur Lichtemission angeregt wird. Die Elektroden sind nicht im Innern der Messkammer, sondern an deren Aussenseite angebracht und die Anregung des Gases erfolgt induktiv oder kapazitiv. Die SU-A-188 591 offenbart eine Gasentladungslampe, deren einander gegenüberliegende Elektroden sich verjüngen und am Ende abgeflacht sind, wobei die Abflachung der Kathode eine Spitze aufweist.

Bekannte Vorrichtungen, bei denen mit Hilfe des Emissionsspektrums kleinste Restgasmengen / Restgasverunreinigungen in einer Konzentration von etwa 1 bis 50 ppm (Volumen) oder gar weniger, in Edelgasen wie beispielsweise Helium (He), Neon (Ne) oder Argon (Ar) bestimmt wird, mit im Messraum angeordneten Elektroden, haben sich bisher vor allem zum Messen unter Laborbedingungen oder laborähnlichen Bedingungen bewährt. Eine Laboreinrichtung zum Messen von Stickstoffspuren in Helium ist beispielsweise in der Zeitschrift Cryogenics, 1986, Vol. 26. Mai, S. 297-299 im Artikel "Detector for trace amounts of nitrogen in helium", R.J. Walker, beschrieben. Diese Vorrichtung beschreibt die Verwendung einer Gleichstromquelle für die Elektroden.

Die Vorrichtungen erlauben die kontinuierliche Ueberwachung der Gasverunreinigungen nicht, da die Abnutzung und/oder die Veränderung der Elektroden den zuverlässigen Dauer-Messbetrieb über grössere Zeiträume nicht zulassen.

Die Erfindung bringt hier wesentliche Verbesserungen, indem sie eine Vorrichtung schafft, welche das zuverlässige Messen von Verunreinigungen über grössere Zeiträume von Wochen und Monaten erlaubt. Erfindungsgemäss ist eine derartige Vorrichtung gekennzeichnet durch die Merkmale im kennzeichnenden Teil von Anspruch 1. Die Verwendung einer solchen Vorrichtung zum Bestimmen von gasförmigen Verunreinigungs-Spuren in einem Edelgas, wobei es sich bei den Verunreinigungs-Spuren ebenfalls um ein Edelgas handeln kann ist von ganz besonderem Interesse. Die abhängigen Ansprüche beziehen sich auf vorteilhafte Ausbildungsformen der Vorrichtung, sowie Anwendungen der Vorrichtung. Die Restgasmengen können dabei beispielsweise Stickstoff (N), Sauerstoff (O), Wasserdampf ($H_2O$), Wasserstoff (H), gasförmiger Kohlenwasserstoff ($C_xH_y$), wiederum ein anderes Edelgas, oder mehrere verschiedene davon sein.

Durch die Verwendung einer niederfrequenten Wechselstromquelle im Frequenzbereich von beispielsweise weniger als einem kHz für die Elektroden zum Erzeugen des Lichtbogens im zu messenden Gas mit den Verunreinigungen gelingt es, die Abnutzung der Elektrodenspitzen praktisch zu eliminieren und eine um ein Vielfaches höhere kontinuierliche Betriebsdauer und Lebensdauer von einigen hundert bis zu einigen tausend Stunden zu erreichen. Die erfindungsgemäße Ausführung, bei der die Oberfläche der Spitze ungefähr der Fläche der Glimmschicht des Lichtbogens im Betrieb ist, hatsich als für die spektrometrische Beobachtung besonders günstig erwiesen. Bei der erfindungsgemäßen Ausführung mit der auf das kegelstumpfförmig abgeflachte Ende aufgesetzten zylindrischen Spitze bleibt die Glimmschicht besonders gut in der gewünschten Lage konzentriert. Die Frequenz der niederfrequenten Wechselstromquelle im Frequenzbereich von weniger als einem kHz kann beispielsweise im Frequenzbereich von etwa 50 Hz gewählt sein. Die Spannung kann in der Grössenordnung von etwa 1500 V gewählt werden, kann aber auch im Bereich von mehreren kV liegen. Die Stromstärke des Lichtbogenstroms liegt beispielsweise in der Grössenordnung von einigen mA. Der Elektrodenabstand liegt beispielsweise im Bereich von einigen Millimetern. Der Druck in der Messzelle der Anordnung kann in der Grössenordnung von etwa einem bis zwei bar liegen.

Eine derartige Vorrichtung kann zum gleichzeitigen Bestimmen von mehreren, verschiedenen, kleinsten Mengen von Verunreinigungen im Bereich von etwa einem Bruchteil eines ppmv (ppm in Volumeneinheiten) bis einigen hundert ppmv verwendet werden. Eine derartige Vorrichtung weist z.B. für jede zu bestimmende Verunreinigungskomponente einen für deren Spektrallinien charakterischen Filter, beispielsweise Interferenzfilter und einen für dieses Licht empfindlichen Photosensor zum Messen der Intensität dieser Spektrallinien auf. Vereinfacht gesagt ist die Intensität der verschiedenen Spektrallinien, die für die verschiedenen Verunreinigungen charakteristisch sind, ein Mass für die Konzentration einer Verunreinigung. Allerdings ist zu berücksichtigen, dass die Intensität - betrachtet bei einer bestimmten Wellenlänge - einem Untergrund überlagert ist. Die effektive von der Verunreinigung stammende Intensität, wird aus Linearkombinationen der verschiedenen gemessenen Intensitäten rechnerisch bestimmt. Die rechnerische Auswertung, d.h. das

2

Bilden der Linearkombinationen und weiterer Grössen kann mit einem Analog- oder einem Digitalrechner erfolgen, dem die verstärkten Signale der mit den Photosensoren gemessenen Intensitäten zugeführt werden.

Die Vorrichtung ist auch zum Bestimmen des Oel-Aerosol-Gehalts in einem Gas geeignet, wobei in diesem Fall die Vorrichtung einen Pyrolysator aufweist und die Messung intermittierend betrieben wird.

Beispiele der Erfindung werden anhand der Figuren näher erläutert. Es zeigen:

Fig. 1    das vereinfachte Blockschema einer erfindungsgemässen Vorrichtung zum Bestimmen von Restgasmengen;

Fig. 2    schematisch, eine mögliche Anordnung einer erfindungsgemässen Vorrichtung mit einem Pyrolysator, mit welcher die Verunreinigung mit Aerosol bestimmt werden kann;

Fig. 3    ein Beispiel eines Intensitätsverlaufs des Emissionsspektrums des Lichtbogens in Helium mit verschiedenen Restgas-Verunreinigungen, in Abhängigkeit von der Wellenlänge und gemessen mit einer Vorrichtung nach der Erfindung; anhand dieser Kurven wird auch  das Bestimmen der Konzentration einzelner Verunreinigungen mit Hilfe von Linearkombinationen der gemessenen Intensitäten erläutert;

Fig. 4    das Prinzipschema einer Analogschaltung für das Bilden der Linearkombinationen der gemessen Intensitäten und zum Berechnen der von den Verunreinigungen erzeugten, effektiven Intensität (Nettointensität) im für die Verunreinigung typischen Spektralbereich;

Fig. 5    vergrössert, die Seitenansicht einer Elektrode für eine Vorrichtung nach der Erfindung.

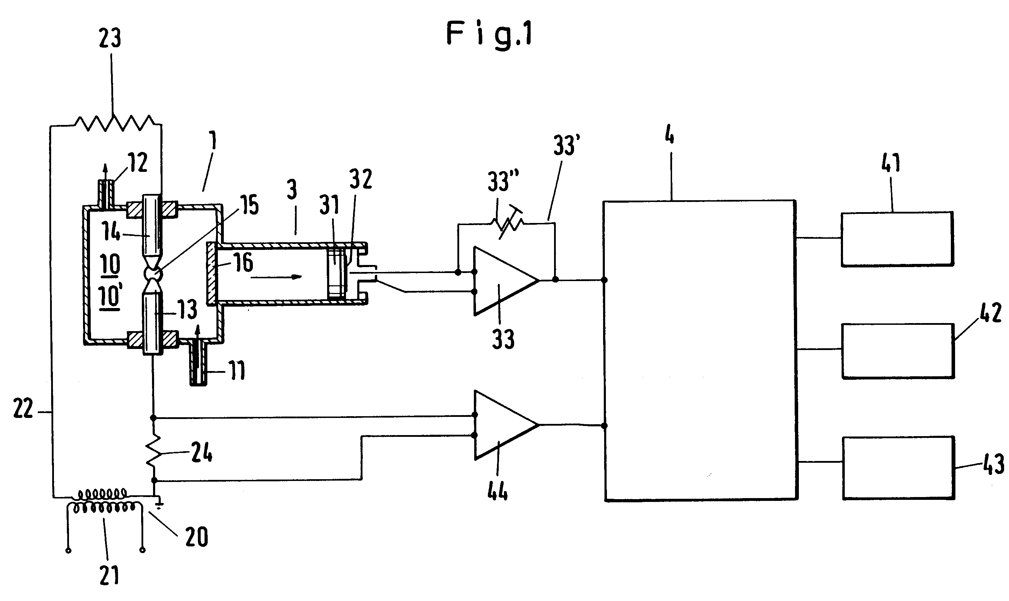

Fig. 1 zeigt das Prinzipschema der Vorrichtung zum Bestimmen der Verunreinigung. Sie besteht im wesentlichen aus der gasdichten Messkammer oder Messzelle 1, die mit dem zu messenden Gas 10 gefüllt ist. Beim Gas 10 handle es sich beispielsweise um He, das Spuren der gasförmigen Verunreinigung 10', die z.B. Stickstoff, Neon, Argon, Wasserdampf, gasförmiger Kohlewasserstoff oder mehrere davon sein kann, aufweist. Die Messkammer 1 weist den Einlass 11 und den Auslass 12 für das auf die Spuren 10' zu untersuchende Gas auf. Die beiden Elektroden 13, 14 sind an die Wechselspannungsquelle/Wechselstromquelle, den Transformator 20 angeschlossen. Im Sekundärstromkreis 22 des Transformators 20 sind die beiden Widerstände 23 und 24 angeordnet. Zwischen den sich gegenüberliegenden Spitzen der Elektroden 13 und 14 wird im zu messenden Gas 10 ein Lichtbogen 15 erzeugt, spektrale Zusammensetzung (Emissionsspektrum) untersucht und woraus die Konzentration der Verunreinigung/en bestimmt wird. Der Lichtbogenstrom liegt beispielsweise zwischen 10 und 20 mA. Die Messkammer 1 weist ein gasdichtes Fenster 16 auf, das für Licht im für die Messung wichtigen Frequenzbereich durchlässig ist, z.B. ein Fenster aus Quarzglas. In der Sensorkammer 3 sind spektral selektive Filter und Lichtsensoren z.B. Interferenzfilter 31 mit Photodioden 32 angeordnet. Die im Photosensor 32 erzeugten elektrischen Signale werden im Verstärker 33 verstärkt und in der Auswerteelektronik 4 unter anderem linearisiert. Mit dem Kreis 33' mit dem variablen Widerstand 33" über dem Verstärker 33 werden dessen Ausgangssignale normiert. Eine derartige Anordnung eignet sich zum Messen und Bestimmen der Konzentration einer einzigen Restgasverunreinigung 10', beispielsweise Stickstoff im Gas 10, z.B. Helium.

In einer Vorrichtung zum bestimmen der Konzentration mehrerer Spurengase 10', ist für jedes Spurengas 10' in der Sensorkammer 3 ein Filter mit Photosensor angeordnet, dessen Signale über einen Verstärker ebenfalls der Auswerteelektronik 4 zugeführt werden. Diese Interferenzfilter sind je für Spektrallinien eines bestimmen Spurengases selektiv durchlässig. Die Interferenzfilter können sektoriell, nebeneinander angeordnet sein. In der schematischen Fig. 1 ist nur ein Interferenzfilter 31 mit der Photodiode 32 und dem nachgeschalten Verstärker 33 gezeigt.

In der Auswerteelektronik 4 eines Mehrkomponentendetektor-Geräts wird aus Linearkombinationen der für die einzelnen Komponeten/Spurengase 10' gemessenen spektralen Intensitäten die Konzentration der einzelnen Spurengase 10' bestimmt und beispielsweise an einer Anzeigeeinheit 41 dargestellt. Die Anzeige kann optisch, direkt an einem Display erfolgen. Die Konzentration der Restgase 10' kann aber auch auf einem Speichermedium laufend registriert, oder die Werte der Konzentration können direkt einem Rechner 43 zugeführt und dort weiterverarbeitet werden. Ueber dem Widerstand 24 wird die Stromstärke im Elektrodenstromkreis gemessen und vom Verstärker 44 ein normiertes Signal für die Stromgrösse der Auswerteelektronik 4 zugeführt.

Es kann beispielsweise auch eine Alarmeinheit 42 vorgesehen sein, die beim Ueberschreiten eines wählbaren Wertes der Konzentration eines oder mehrere Spurengase einen Alarm auslöst.

Für eine Vorrichtung, mit der nur eine einzige Verunreinigung 10', z.B. Stickstoffspuren in Helium gemessen wird, genügt ein einziger Interferenzfilter 31 mit Photosensor 32 und Auswertelektronik. Die Ausführung kann entsprechend vereinfacht erfolgen.

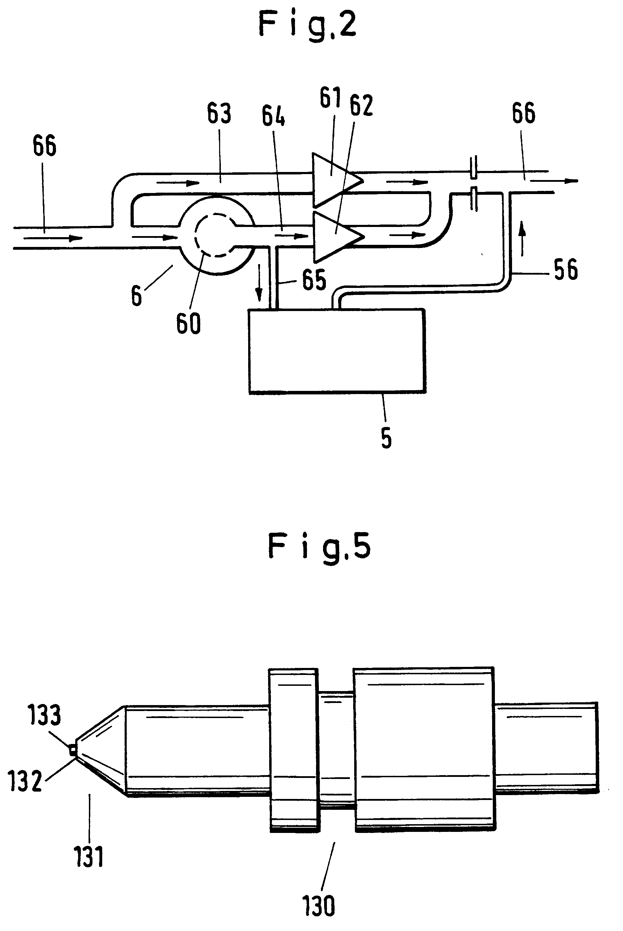

Fig. 2 zeigt eine Anordnung der eigentlichen Messvorrichtung 5 mit dem Spektrometer und der Auswerteelektronik, die es erlaubt auch Spuren von Kohlenwasserstoffen und auch den Anteil von Aeorsolen wie z.B. Fett- oder Oel-Aerosolen getrennt zu bestimmen. Bei dieser Messung der Aerosolkonzentration erfolgt der Betrieb der Vorrichtung 5, bezogen auf die Aerosol-Messung in zwei Phasen, während die Konzentration von anderen Restgasen weiterhin kontinuierlich abläuft. Nur die Messung des Aerosolanteils verläuft diskontinuierlich.

Der Pyrolysator 6 ist im wesentlichen ein Metallfilter 60 mit einer Porenweite im Bereich von beispielsweise $0,2\mu$ bis $3\mu$, in welchem die Aerosole zurückgehalten werden. Der Pyrolysator weist weiter eine hier nicht gezeichnete Mantelheizleiterdoppelwicklung auf, die mit einer Spannvorrichtung auf den Filter 60 gespannt ist. Die Temperatur im Pyrolysatorfilter 60 wird mit einem Thermoelement, das ebenfalls nicht gezeigt ist, innenseitig am Metallfilter gemessen.

In der ersten Phase werden im unbeheizten Pyrolysator 6, im Metallfilter 60 die Aerosole beispielsweise bei gegenüber dem Massenstrom im Messzweig 65 100-fach erhöhtem Massenstrom angereichert. Das Ventil 61 ist geschlossen und das Ventil 62 geöffnet. Im Zweig 63 fliesst kein Gas. Ueber die Messleitung 65 fliesst ein Teilstrom des aerosolfreien Gases zur eigentlichen Messeinrichtung 5 und über die Rückleitung 56 wieder zurück zum Hauptstrom. Der Grossteil des Gases fliesst in dieser ersten Phase durch den Zweig 64.

In der zweiten Phase erfolgt die Pyrolysation der Aerosole in flüchtige Kohlenwasserstoffe bei einer Temperatur von beispielsweise 400° C. Das Ventil 61 ist in dieser Phase geöffnet und das Ventil 62 geschlossen. Der grösste Teil des Gases fliesst durch den Zweig 63 und nur ein kleiner Mess-Gasstrom über den Messzweig 65 zu Messgerät 5.

Die Temperatur des Filterelements wird in einem Rechner mit dem $C_xH_y$-Signal, in dem Sinne korreliert, dass die Messperiode für die aus der Pyrolyse stammenden flüchtigen Kohlenwasserstoffe, die eine bestimmte Zeitdauer hat, erst beim Erreichen einer wählbaren Schwelltemperatur beginnt. Das $C_xH_y$-Signal wird bei der Pyrolyse ansteigen, wenn Aerosole in der ersten Phase im Filter 60 des Pyrolysators 6 angereichert wurden. Die erste Phase kann im Bereich von 5 bis 30 Minuten und die Phase zwei im Bereich von etwa 5 Minuten liegen.

Die Gasströme in den einzelnen Zweigen können mit Gas-Durchflussmessern bekannter Bauart, die hier nicht gezeichnet sind gemessen werden. Im Hauptgasstrom 66 kann der Druck im Bereich von 10 bis 20 bar und im Messzweig 5, 56 im Bereich von 1 bis 2 bar liegen.

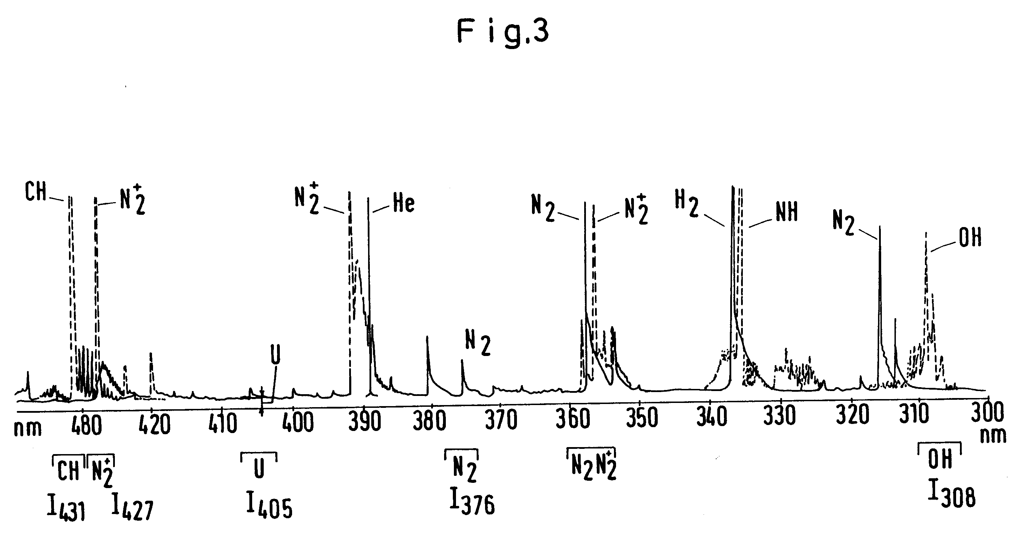

Das Auswerteverfahren einer Vorrichtung mehrerer Restgas-Komponenten 10′, sowie Einzelheiten einer dazu geeigneten Vorrichtung, werden anhand von Fig. 3 erläutert. Diese zeigt den Verlauf der Intensität des Emissionsspektrums des Lichtes im Lichtbogen 15 in Abhängigkeit von der Wellenlänge. Auf der Abszisse ist die Wellenlänge in Nanometern (nm) angegeben. Die unter der Abszisse gezeichneten klammerartigen Symbole stellen die für die Bestimmung verschiedener Restgase 10′ verwendeten Interferenzfilter mit Angabe der Wellenlänge in nm dar.

Gemessen wird im dargestellten Beispiel die Lichtemission bei 431 nm, 427 nm, 405 nm, 376 nm und 308 nm.

Die Bandbreite der Filter und die Halbwertsbreiten (HWB) der Maxima bei diesen Frequenzen sind in der nachstehenden Tabelle zusammengestellt:

| Wellenlänge | Halbwertsbreite |
|---|---|
| 308 ± 2 nm | 5-10 nm |
| 376 ± 1 nm | 4-6 nm |
| 405 ± 1 nm | 4-6 nm |
| 427 ± 1 nm | 4-6 nm |
| 431 ± 1 nm | 4-6 nm |

Die bei diesen Frequenzen gemessenen Intensitäten sind entsprechend mit $I_{431}$, $I_{427}$, $I_{405}$, $I_{376}$, $I_{308}$ bezeichnet. In diesen Frequenzbereichen wird die repräsentative Lichtemission von $N_2$, $N_2^+$, CH, OH und des kontinuierlichen Untergrundes U, bezeichnet mit

$$I_{N_2}, \quad I_{N_2^+},$$

$I_{CH}$, $I_{OH}$ und $I_U$, gemessen.

Es ergibt sich aus den Messungen das folgende Gleichungssystem:

$$I_{431} = I_{CH} + a_1 I_N + I_U \qquad (1)$$

$$I_{427} = I_{N_2}^+ + a_2 I_{CH} + I_U \qquad (2)$$

$$I_{405} = a_5 I_{N_2} + I_U \qquad (3)$$

$$I_{376} = I_{N_2} + I_U \qquad (4)$$

$$I_{308} = I_{OH} + I_U \qquad (5)$$

$a_1$, $a_2$, $a_5$ sind Konstanten

Möglicher weiterer Lösungsweg:

a) Bestimmung der Bruttoreinintensitäten für CH und

$$N_2^+$$

(Bruttointensität = Intensität von einem Spurengas mit überlagerten Intensitäten von andern Gasen/Elementen plus Intensität des Untergrundes

Bruttoreinintensität = Intensität rein von einem einzigen, bestimmten Spurengas herrührend plus Intensität des Untergrundes):

$$(1)-a_1(2): I_{CH}(1-a_1 a_2) + I_U(1-a_1) = I_{431}-a_1 I_{427} \qquad (6)$$

$$(2)-a_2(1): I_{N_2}^+(1-a_1 a_2) + I_U(1-a_2) = I_{427}-a_2 I_{431} \qquad (7)$$

b) Nettointensitäten für $N_2$ und U (Nettointensität = Intensität rein von einem einzigen, bestimmten Spurengas herrührend, ohne Intensität des Untergrundes)

$$(3)-a_5(4): I_U(1-a_5) = I_{405}-a_5 I_{376} \qquad (8)$$

$$(4)-(3): I_{N_2}(1-a_5) = I_{376}-I_{405} \qquad (9)$$

Die Nettointensitäten der einzelnen Restgase werden erhalten durch Subtraktion der Gleichung für die Intensität des Untergrundes (Gleichung 8) von den Gleichungen für die Intensitäten der einzelnen Restgaskomponenten (Gleichung (6), (7), (9) und (5)).

Die Lösungsgleichungen sind Linearkombinationen der Ausgangsgleichungen.

Die Konzentrationen der Verunreinigungen werden aus den Nettointensitäten nach der allgemeinen Formel (hier nur angegeben für Conc $N_2$ aus

$$I_{N_2^+}$$

(Conc = Konzentration)

$$\text{Conc } N_2 = \frac{a_{N_2^+} \cdot I_{N_2^+} \cdot (1 + \sum_i b_i I_i)}{c_{N_2^+} + J - d_{N_2^+}\, I_{N_2^+} - \sum_i d_i I_i} \qquad (10)$$

dabei sind:

$$a_{N_2^+} \text{ und } c_{N_2^+}$$

empirische Konstanten
J der gemessene Lichtbogenstrom
$b_i$, $d_i$ die Koeffizienten der Verunreinigung i
$I_i$ Nettointensität der Verunreinigung $_i$
Zusätzlich berücksichtigt ist $H_2O$ und J.

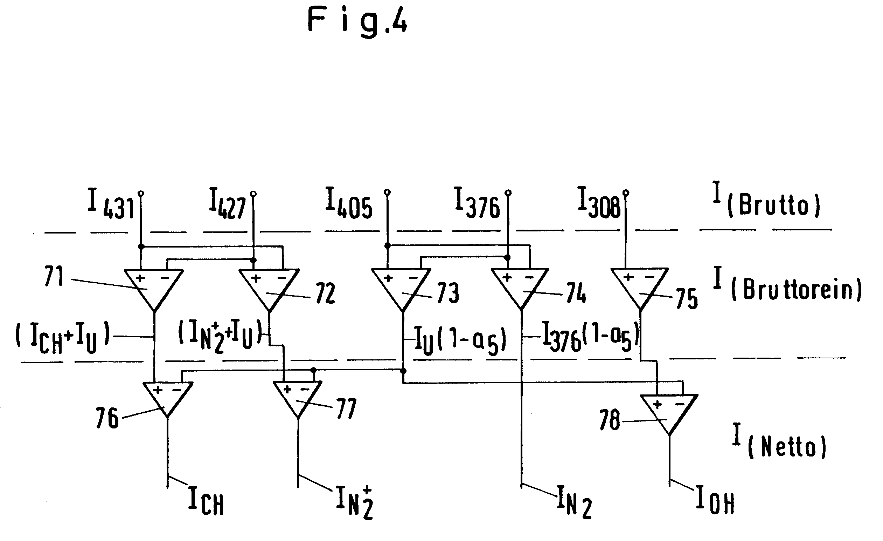

Gleichung (10) kann beispielsweise in einer analogen Schaltung realisiert werden wie sie im Prinzipschema von Fig. 4 dargestellt ist. Der Verstärkern 71 bis 78 werden, wie in der Zeichnung gezeigt die Bruttointensitäten ($I_{brutto}$) zugeführt und daraus die Bruttoreinintensitäten ($I_{brutrein}$) bzw. die Nettointensitäten ($I_{netto}$) gebildet. Diese Art der Signalbehandlung könnte natürlich auch in Digitaltechnik erfolgen.

Fig. 5 schliesslich zeigt die Seitenansicht einer Elektrode 130, wie sie in einer Vorrichtung nach Fig. 1 verwendet wird. Das konische Ende 131 ist kegelstumpfförmig ausgebildet und weist auf der Abflachung 132 eine zylindrische Spitze 133 auf. Das konische Ende 131 kann beispielsweise einen Winkel in der Grössenordnung von 70° aufweisen.

**Patentansprüche**

1. Vorrichtung zum kontinuierlichen Bestimmen von kleinen Mengen von Verunreinigungen in Gasen, insbesondere in Edelgasen, mit einer Meßkammer, in welcher Elektroden angeordnet sind, mit denen im zu messenden Gas eine Gasentladung erzeugt wird, wobei die Elektroden konisch geformt und mit ihren Enden einander gegenüberliegend angeordnet sind, und mit Mitteln zum Messen und Auswerten des Emissionsspektrums des verunreinigten Gases, **dadurch gekennzeichnet, daß** das konisch geformte Ende (131) jeder Elektrode (13, 14, 130) aufweist, deren kegelstumpfförmig abgeflacht ist und auf der Abflachung (132) eine zylindrische Spitze (133) Oberfläche derjenigen der Glimmschicht des Lichtbogens (15) entspricht, und daß die Elektroden (13, 14) an eine bipolare Wechselspannungsquelle (20) mit einer Frequenz von weniger als 1 kHz, vorzugsweise 50 Hz, angeschlossen sind.

2. Vorrichtung nach Anspruch 1, dadurch gekennzeichnet, daß die Meßkammer (1) einen Eingang (11) und einen Ausgang (12) zum kontinuierlichen Zuführen und Wegführen von Gas (10, 10') zu und von der Meßkammer (1) aufweist.

3. Vorrichtung nach Anspruch 1 oder 2, dadurch gekennzeichnet, daß die Mittel zum Messen des Emissionsspektrums mehrere und verschiedene spektral selektive Filter (31) aufweisen, denen Photoempfänger (32) nachgeschaltet sind.

4. Vorrichtung nach einem oder mehreren der Ansprüche 1 bis 3, dadurch gekennzeichnet, daß im Gasstrom (66) ein diskontinuierlich arbeitender Pyrolysator (6, 60) angeordnet ist, so daß mit der Vorrichtung (5) diskontinuierlich die Konzentration von Aerosolen (10') im Gas (10) bestimmt werden kann.

5. Vorrichtung nach einem der Ansprüche 3 oder 4, dadurch gekennzeichnet, daß die Mittel (4) zum Auswerten des Emissionsspektrums des verunreinigten Gases (10, 10') Schaltungsmittel (71 bis 78) aufweisen, welche die Konzentration verschiedener Gasverunreinigungen nach einem Additionsverfahren der für die verschiedenen Verunreinigungen (10') gemessenen Intensitäten ermitteln.

**6.** Vorrichtung nach Anspruch 5, dadurch gekennzeichnet, daß die Mittel (4) zum Auswerten des Emissionsspektrums (15) die Konzentration laufend ermitteln.

**7.** Vorrichtung nach einem der Ansprüche 1 bis 6, dadurch gekennzeichnet, daß der konisch geformte Kegelstumpf (131) der Elektrode (130) einen Winkel von etwa 70° aufweist.

**8.** Verwendung einer Vorrichtung nach einem der Ansprüche 1 bis 7 zum Bestimmen von gasförmigen Verunreinigungsspuren (10') in einem Edelgas (10).

**9.** Verwendung einer Vorrichtung nach Anspruch 8 zum Bestimmen des Gehalts von einem oder mehreren der Gase Stickstoff, Wasserstoff, Sauerstoff, Argon, Neon, gasförmiger Kohlenwasserstoff und Wasserdampf in Helium.

**10.** Verwendung einer Vorrichtung nach Anspruch 9 zum kontinuierlichen und/oder quasikontinuierlichen Messen der Verunreinigung im Kryogas eines Kryogasverflüssigers.

**11.** Verwendung der Vorrichtung nach Anspruch 10 zum Messen der Verunreinigung von Helium in einer Heliumverflüssigungsanlage.

## Claims

**1.** A device for continuously determining small quantities of impurities in gases, in particular in rare gases, comprising a measuring chamber in which are arranged electrodes with which a gas discharge is produced in the gas to be measured, wherein the electrodes are of conical formation and at their ends are disposed opposite one another, and comprising means for measuring and analyzing the emission spectrum of the impure gas, characterised in that the conically shaped end (131) of each electrode (13, 14, 130) is flattened in a frustum-shaped formation and on the flattened portion (132) comprises a cylindrical tip (133), the upper surface of which corresponds to that of the glow layer of the arc (15), and that the electrodes (13, 14) are connected to a bipolar a.c. voltage source (20) with a frequency of less than 1 kHz, preferably 50 Hz.

**2.** A device as claimed in Claim 1, characterised in that the measuring chamber (1) is provided with an input (11) and an output (12) for continuously supplying gas (10, 10') to and from the measuring chamber (1).

**3.** A device as claimed in Claim 1 or 2, characterised in that the means for measuring the emission spectrum comprise a plurality of different spectrally selective filters (31) connected at their output end to photo-receivers (32).

**4.** A device as claimed in one or more of Claims 1 to 3, characterised in that a discontinuously operating pyrolyzer (6, 60) is arranged in the gas stream (66), so that the concentration of aerosols (10') in the gas (10) can be determined discontinuously by the device (5).

**5.** A device as claimed in one of Claims 3 or 4, characterised in that the means (4) for analyzing the emission spectrum of the impure gas (10, 10') comprise circuitry means (71 to 78) which determine the concentration of different gas impurities by an addition process of the intensities measured for the different impurities (10').

**6.** A device as claimed in Claim 5, characterised in that the means (4) for analyzing the emission spectrum (15) continuously determine the concentration.

**7.** A device as claimed in one of Claims 1 to 6, characterised in that the conically shaped frustum (131) of the electrode (130) possesses an angle of approximately 70°.

**8.** The use of a device as claimed in one of Claims 1 to 7 for determining traces of gaseous impurities (10') in a rare gas (10).

9. The use of a device as claimed in Claim 8 for determining the content of one or more of the gases nitrogen, hydrogen, oxygen, argon, neon, gaseous hydrocarbon and water vapour in helium.

10. The use of a device as claimed in Claim 9 for continuously and/or quasi-continuously measuring the impurity in the cryogas of a cryogas liquefier.

11. The use of the device claimed in Claim 10 for measuring the impurity of helium in a helium liquefication apparatus.

**Revendications**

1. Dispositif pour la détermination en continu de petites quantités d'impuretés dans des gaz, en particulier des gaz nobles, avec une chambre ou cellule de mesure dans laquelle des électrodes sont disposées et au moyen desquelles une décharge gazeuse est générée dans le gaz à mesurer, les électrodes présentant une forme conique en étant disposées avec leurs extrémités l'une en face de l'autre, et avec des moyens de mesure et d'analyse du spectre d'émission du gaz comportant les impuretés, caractérisé en ce que l'extrémité de forme conique (131) de chaque électrode (13, 14, 130) est aplatie de manière à présenter une forme tronconique, et une pointe cylindrique (133) disposée sur le méplat (132), la surface de la pointe correspondant à celle de la couche de décharge de l'arc (15), et en ce que les électrodes (13, 14) sont raccordées à une source bipolaire de tension alternatif (20) présentant une fréquence inférieure à 1 kHz, de préférence 50 Kz.

2. Dispositif selon la revendication 1, caractérisé en ce que la chambre de mesure (1) présente une entrée (11) et une sortie (12) pour l'introduction ainsi que l'évacuation continu des gaz (10, 10') à l'entrée et à la sortie de la chambre de mesure (1).

3. Dispositif selon la revendication 1 ou 2, caractérisé en ce que les moyens de mesure du spectre d'émission présentent plusieurs différents filtres spectralement sélectifs différents (31) suivis par des photorécepteurs (32).

4. Dispositif selon une ou plusieurs des revendications 1 à 3, caractérisé en ce qu'un appareil de pyrolyse (6, 60) fonctionnant en continu est disposé dans le courant gazeux (66) et permet au dispositif (5) de déterminer de façon discontinue la concentration d'aérosols (10') dans le gaz (10) de façon discontinue.

5. Dispositif selon l'une des revendications 3 ou 4, caractérisé en ce que les moyens (4) d'évaluation du spectre d'émission du gaz pollué (10, 10') présentent des moyens de circuit électrique (71 à 78) susceptibles de fournir la concentration de différentes impuretés dans le gaz après un processus d'addition des intensités mesurées pour les différentes impuretés (10').

6. Dispositif selon la revendication 5, caractérisé en ce que les moyens (4) d'analyse du spectre d'émission (15) fournissent la concentration de façon continue.

7. Dispositif selon l'une des revendications 1 à 6, caractérisé en ce que le tronc de cône de forme conique (131) des électrodes (130) présente un angle d'environ 70°.

8. Application d'un dispositif selon l'une des revendications 1 à 7, à la détermination de traces d'impuretés gazeuses (10') dans un gaz rare (10).

9. Application d'un dispositif selon la revendication 8, à la détermination du contenu d'un ou plusieurs des gaz comprenant de l'azote, de l'hydrogène, de l'oxygène, de l'argon, du néon, des hydrocarbures gazeux et de la vapeur d'eau dans de l'hélium.

10. Application d'un dispositif selon la revendication 9, à la mesure continue et/ou quasi-continue de la pollution d'un gaz cryogénique dans un dispositif de condensation de gaz cryogénique.

11. Application d'un dispositif selon la revendication 10, à la mesure des impuretés dans de l'hélium dans une installation de liquéfaction de l'hélium.

Fig.1

# Fig.2

# Fig.5

Fig.3

# Fig.4

$I_{431}$  $I_{427}$  $I_{405}$  $I_{376}$  $I_{308}$  $I_{(Brutto)}$

71  72  73  74  75  $I_{(Bruttorein)}$

$(I_{CH}+I_U)$  $(I_{N_2^+}+I_U)$  $I_U(1-a_5)$  $I_{376}(1-a_5)$

76  77  78  $I_{(Netto)}$

$I_{CH}$  $I_{N_2^+}$  $I_{N_2}$  $I_{OH}$

EP 0 337 933 B1